# EUROPEAN PATENT APPLICATION

(11) **EP 1 209 922 A2**
(43) Date of publication of application: **29.05.2002**
(21) Application number: 01103607.6
(22) Date of filing: 21.02.2001
(51) Int. Cl.: H04N 9/804

(54) **Content supply method and content data recording/reproducing method and apparatus**

(30) Priority: 24.11.2000 JP 2000357980
(71) Applicant: KABUSHIKI KAISHA TOSHIBA, Kawasaki-shi, Kanagawa-ken 210-8572 (JP)
(72) Inventor: Fukushima, Michihiro, 1-1-1 Shibaura, Minato-ku Tokyo 105-8001 (JP)
(74) Representative: HOFFMANN - EITLE

(57) **Abstract**

A TS separation circuit (12) separates, from a received signal, TS data including content to be recorded. A payload extraction section (16) extracts only a payload portion of the TS data, and records it as PS data on a HDD (18). A read-out control section (15) reads out the PS data from the HDD and outputs TS data, which is obtained by removing a pack header from the PS data, to the TS separation circuit (12). The TS separation circuit (12) separates video/sound data from the TS data. The video/sound data is descrambled and output by a video/sound descrambling circuit (13).

## Description

The present invention relates to a system wherein content (e.g., movies encoded by a MPEG compression scheme) transmitted in digital broadcasting is once stored in a recording medium such as an HDD and then read out from the recording medium and reproduced.
More particularly, this invention relates to a content supply method and a content receiving/recording/ reproducing method and apparatus, which are suitable for special reproduction when data is reproduced from the recording medium.

In ordinary digital broadcasting, a broadcasting station transmits encoded video/sound signals in a TS (transport stream) format of an MPEG (Moving Pictures Experts Group) compression scheme. A receiving side separates and decodes the encoded video/sound signals from the TS and obtains video/sound signals.

Jpn. Pat. Appln. KOKAI Publication No. 11-355686 discloses a method of recording a TS transmitted in ordinary digital broadcasting in an HDD and reproducing the TS. In this method, a file name is added to a received program and this program is recorded on the HDD. At the time of reproduction, the file name is displayed on a screen of an OSD (on-screen display), and the recorded program can be selected. In actual use, however, this system is not easy to handle.

Since the TS is a multiplexing format designed for real-time decoding/reproduction, as in broadcasting, it is not suitable for special reproduction such as fast forward or slow reproduction, as in the case of package media, e.g. a DVD-VIDEO storing PS (program stream) format data including I-picture recording position management information. Accordingly, when content once stored on a recording medium is to be reproduced, the PS format which is suitable for special reproduction is desirable.

However, ordinary digital broadcasting reception terminals for receiving/decoding digital broadcasting content are designed to receive and decode TS format data. Thus, if the received data is of the PS format, the data cannot directly be decoded.

In the meantime, Jpn. Pat. Appln. KOKAI Publication No. 2000-36781 discloses a system wherein accounting is made for each received tune when supplied content data is received by a receiver. Jpn. Pat. Appln. KOKAI Publication No. 2000-165788 discloses a broadcasting receiving terminal which issues a warning if the remaining capacity in a hard disk drive becomes small after the content data is recorded in the hard disk drive.

The object of the present invention is to provide a content supply method and a content receiving/recording/reproducing method and apparatus capable of realizing special reproducing functions, like those of package media such as a DVD-VIDEO, when content supply of movies, etc. is received and recorded on a recording medium and reproduced.

In order to achieve the object, the present invention provides an apparatus for receiving and recording/reproducing transmitted content data, the content data being generated such that encoded video/sound signals are multiplexed as a TS (transport stream), the TS is divided and multiplexed as a PS (program stream), and the PS is divided and multiplexed as a TS for transmission, the apparatus comprising: separation means for separating TS packets from the received data, the TS packets each including the PS which has been divided and multiplexed as the TS; extraction means for extracting PS data from payload portions of the TS packets separated by the separation means; recording means for recording the PS data extracted by the extraction means on a recording medium; and read-out control means for reading out the PS data, which has been recorded by the recording means, from the recording medium and providing the TS data, which has been formed by multiplexing the encoded video/sound signals, from the payload portions of the PS data.

This invention also provides a content supply method comprising the steps of: multiplexing encoded video/sound signals as a TS; dividing and multiplexing the TS as a PS, and providing PS data as PS content data; dividing the PS content data for transmission, and multiplexing once again the divided PS content data as a TS; and transmitting the data multiplexed as the TS.

This summary of the invention does not necessarily describe all necessary features so that the invention may also be a sub-combination of these described features.

The invention can be more fully under stood from the following detailed description when taken in conjunction with the accompanying drawings, in which:
FIGS. 1A to 1D show structures of content supplied in the present invention;
FIG. 2 is a block diagram showing a first embodiment of a digital broadcasting reception terminal according to the present invention, which receives, records and reproduces content;
FIG. 3 shows a state in which the digital broadcasting reception terminal of this invention is provided in a TV receiver;
FIGS. 4A and 4B show data structures in a case where content is received and recorded on a recording medium;
FIGS. 5A and 5B show data structures in a case where data recorded on a recording medium is read out and output;
FIG. 6 is a block diagram showing a second embodiment of the digital broadcasting reception terminal according to the present invention, which receives, records and reproduces content; and
FIG. 7 is a block diagram showing a third embodiment of the digital broadcasting reception terminal according to the present invention, which receives, records and reproduces content.

Embodiments of the present invention will now be described in detail with reference to the accompanying drawings.

A content supply method according to the invention will first be described. The supply of content is performed, for example, from a broadcasting station.

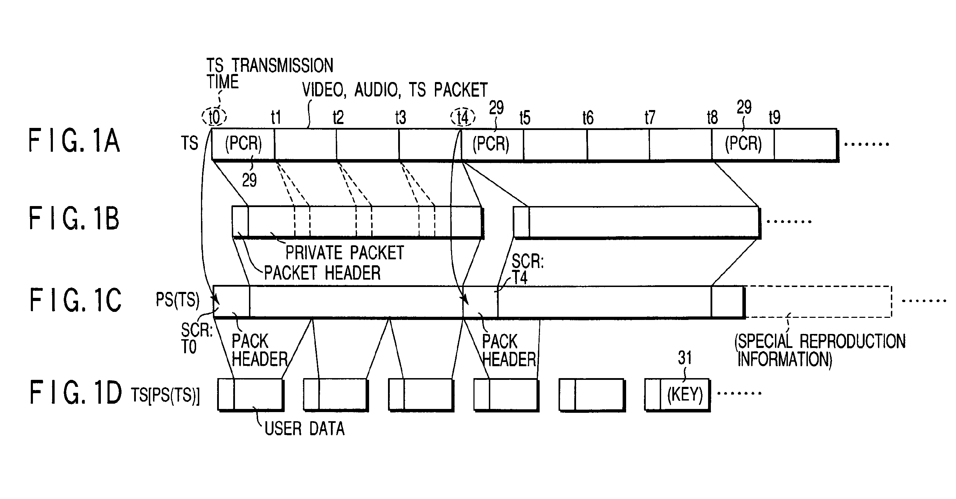

FIG. 1A shows a TS (transport stream) of multiplexed data obtained by encoding video/sound signals by MPEG compression scheme. When the TS is to be transmitted by broadcasting waves, the TS may be sent out at respective transmission times (t0, t1, t2, ···). The TS includes a video TS packet, an audio TS packet, etc. A packet 29 with indication "PCR" is a packet to which a program clock reference (PCR) is added. Each TS packet contains, e.g. 188 byte data.

FIG. 1B shows a private packet containing private data, which is formed by adding a packet head to the TS packet shown in FIG. 1A. One or more TS packets may be packetized to form each private packet.

FIG. 1C shows a PS(TS) formed by adding a pack header to a PS (program stream) comprising one or more private packets shown in FIG. 1B. The data following the pack header is the private packet data formed of the TS packet 29 including the PCR. A system clock reference (SCR) to be set in the pack header is determined so as to keep the temporal relationship on the basis of the PCR (e.g. the PCR is used as the SCR with no change). Special reproduction information 30 may be multiplexed in the PS. The special reproduction information 30 is required in performing special reproduction such as fast forward or slow reproduction on the basis of the encoded information of video/sound data. The special reproduction information 30 includes, e.g. a position of I-picture or a division of a sequence. Based on this information, the recorded data may be edited on the receiver side. The data in the PS format is sent out as content data.

FIG. 1D shows a TS[PS(TS)] formed by dividing the PS shown in FIG. 1C into user data TSs for actual broadcasting and adding a TS header to each user data TS. This TS data includes the TS data shown in FIG. 1A, the packet header shown in FIG. 1B, the pack header shown in FIG. 1C and the TS header. In the actual content supply by the broadcasting station, the user data TSs are supplied to a modulator and sent out as broadcasting waves.

The broadcasting station may scramble the TS, shown in FIG. 1A, of the multiplexed video/sound signals encoded by the MPEG scheme. In this case, a key 31 for descrambling is multiplexed in the TS, as shown in FIG. 1D, and the TS with the key 31 is further scrambled, delivered to the modulator, and sent out as broadcasting waves.

The receiver side receives, purchases and descrambles the broadcast scrambled TS shown in FIG. 1D. Thus, the receiver side acquires the TS data scrambled at the time point in FIG. 1A and the descrambling key 31.

The content receiving, recording and reproducing methods according to the present invention will now be described.

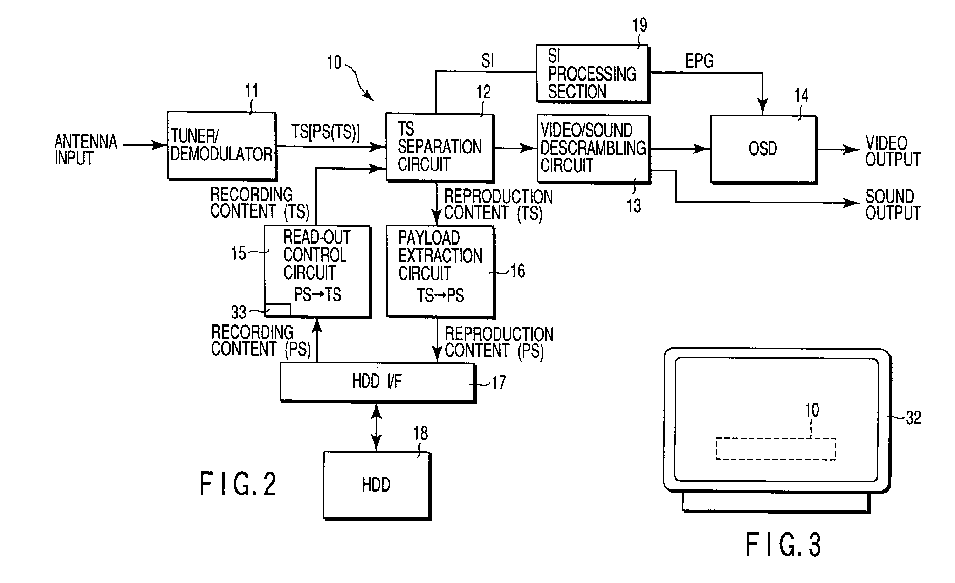

FIG. 2 is a block diagram showing a first embodiment of a digital broadcasting reception terminal to which the content receiving, recording and reproducing methods according to the present invention are applied. The digital broadcasting reception terminal 10 is provided in a TV receiver 32, for example, as shown in FIG. 3, and is used.

A reception/descrambling circuit section of the digital broadcasting reception terminal 10 comprises a tuner/demodulator 11 for tuning and demodulation, a TS separation circuit 12 for separating video/sound data from SI (service information), a video/sound descrambling circuit 13 for descrambling video/sound data, an SI processing section 19 for producing an EPG (electric program guide) from SI data, and an OSD (on-screen display) circuit 14 for multiplexing the EPG on a video signal and outputting the multiplexed signal.

A recording/reproducing circuit section of the digital broadcasting reception terminal 10 comprises a payload extraction circuit 16 for extracting only a layload from the TS packet, an HDD 18 for receiving and recording the extracted payload via an HDD interface 17, and a read-out control circuit 15 for reading out the payload recorded in the HDD 18 via the HDD interface 17.

Referring to FIG. 2, a detailed description will now be given of an operation in a case where ordinary digital broadcast data is received and reproduced in real time.

An RF digital signal sent by digital broadcasting is received by the tuner/demodulator 11 via an antenna (not shown) and subjected to a tuning/demodulating process. The TS separation circuit 12 separates the tuned/demodulated data into video/sound data and SI data necessary for producing EPG, etc. The separated video/sound data is descrambled by the video/sound descrambling circuit 13 provided on the rear stage.
On the other hand, the SI data separated by the TS separation circuit 12 is processed by the SI processing section 19 to produce an EPG. The EPG is multiplexed by the OSD circuit 14 on the video signal descrambled by the video/sound descrambling circuit 13 and is output. The SI data separated by the TS separation circuit 12 is processed using an MPU (not shown), etc. and subjected to a tuning process, etc.

Next, a description will be given of an operation of receiving the supplied content having the structure shown in FIG. 1D, recording it on the HDD and reproducing the recorded content.

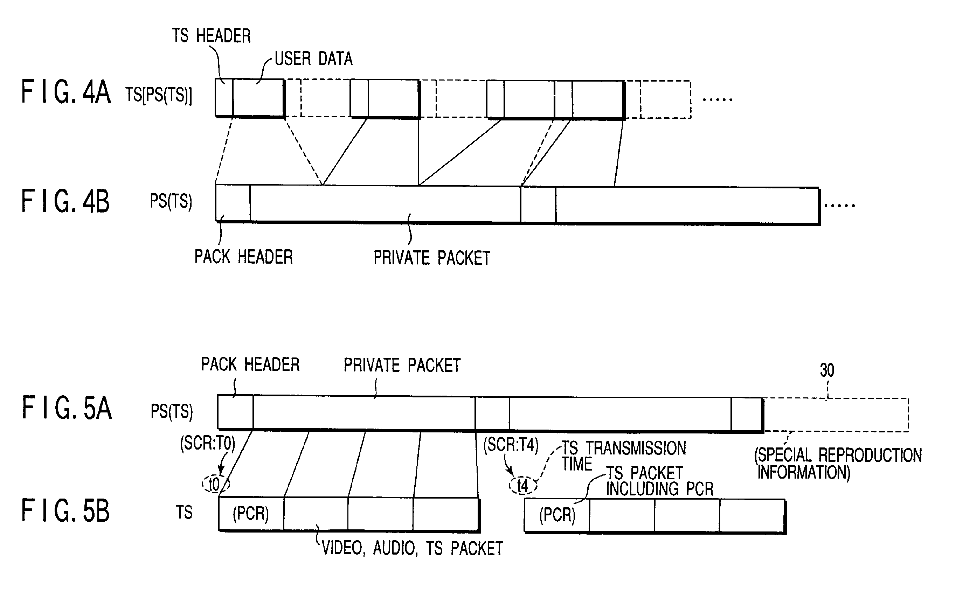

Content data sent from the broadcasting station is received by the tuner/demodulator 11 via the antenna and subjected to the tuning/demodulating process. As a result, the data with the structure shown in FIG. 4A (corresponding to FIG. 1D) is output from the tuner/demodulator 11. This data includes the SI data and content data of plural programs. The TS separation circuit 12 separates the content data (TS packet) to be recorded, from the tuned/demodulated data shown in FIG. 4A, and delivers the separated content data to the payload extraction circuit 16. The payload extraction circuit 16 extracts only the payload (user data portion) from the TS packet (TS header + user data), as shown in FIG. 4B (corresponding to FIG. 1C), and delivers the payload via the HDD interface 17 to the HDD 18 for recording. Although the HDD (hard disk drive) is used as the information recording medium in this embodiment, a semiconductor memory or another type of disk recording medium may be substituted.

When the content data thus broadcast is recorded on the HDD 18, the transmission rate of data sent from the broadcasting station may be made higher than the transmission rate in the case of receiving and reproducing ordinary broadcast data in real time. Thereby, a program of one hour, for instance, can be recorded in about five minutes. In addition, content with a high bit rate may be transmitted using a band with a low bit rate. In other words, a program of one hour may be transmitted and recorded in 24 hours.

When the data recorded on the HDD 18 is to be read out, packet position information indicative of start of read-out (play) is acquired on the basis of the special reproduction information 30 multiplexed on the recorded data, as shown in FIG. 5A (corresponding to FIG. 1C). From the acquired packet position, the read-out of packets is started via the HDD interface 17. In addition, I-picture position information is also recorded as special reproduction information. For example, I-picture position information is recorded before and after the position of the recorded special reproduction information 30. Accordingly, based on the I-picture position information, fast forward reproduction or editing of recorded content can be performed.

The read-out control circuit 15 removes the pack header from the read-out pack shown in FIG. 5A and delivers the resultant data shown in FIG. 5B (corresponding to FIG. 1A) as TS data to the TS separation circuit 12. Subsequently, reproduction is performed like the way the ordinary digital broadcast data is received and reproduced. In other words, video/sound reproduction can be performed using a conventional reproducing circuit.

The read-out control circuit 15 has a time management section (counter) 33. The time management section 33 is initialized by the value of the SCR stored at the pack header shown in FIG. 5A from which read-out has started. After the time management section 33 is initialized, time counting is started. The read-out control section 15 reads out the pack and compares the count value of the time management section 33 and the value of the SCR stored at the pack header of the read-out pack. At the timing of coincidence of these values, the read-out control section 15 outputs the read-out pack to the TS separation circuit 12.
Thereby, the transmission rate of the TS data, from which the pack header has been removed, can be made to coincide with the transmission rate of the initial TS shown in FIG. 1A. In this case, it is possible to control the data transmission rate by calculating the transmission rate on the basis of the time period of data transmission and the time period of stop of data transmission, so as to average the rate of data output to the TS separation circuit 12.

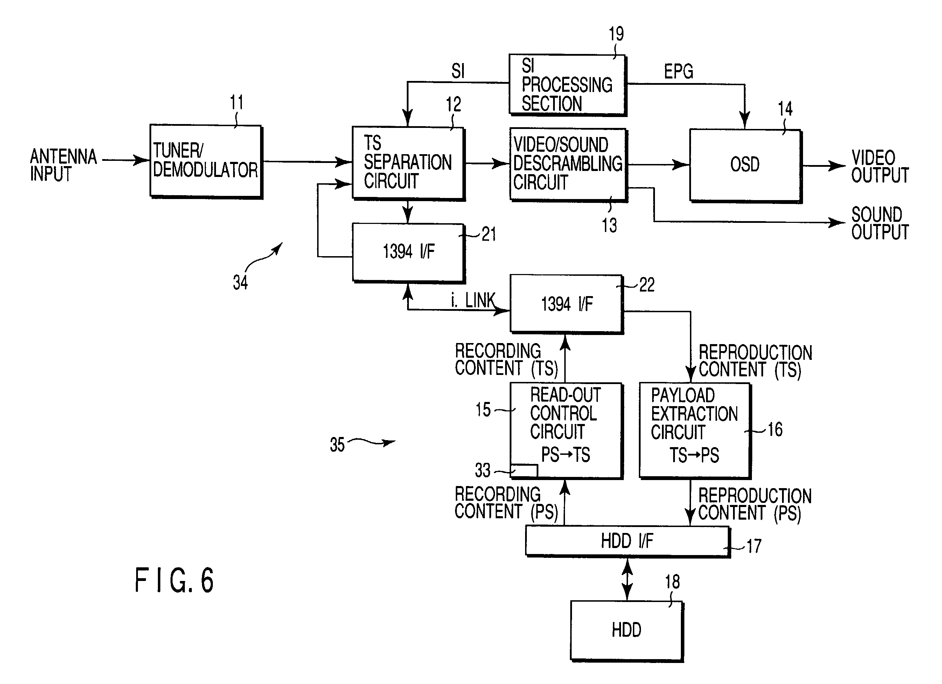

FIG. 6 is a block diagram showing a second embodiment of the digital broadcasting reception terminal to which the content receiving, recording and reproducing methods according to the present invention are applied. The digital broadcasting reception terminal comprises a reception/descrambling circuit section 34 and a recording/reproducing circuit section 35. The reception/descrambling circuit section 34 and recording/reproducing circuit section 35 are connected via 1394 interfaces. The reception/descrambling circuit section 34 is provided, for example, in the TV receiver 32, as shown in FIG. 3. The recording/reproducing circuit section 35 is provided outside the TV receiver 32. In this case, ordinary TS data, as shown in FIGS. 1A and 1D, is transmitted over an i.Link.

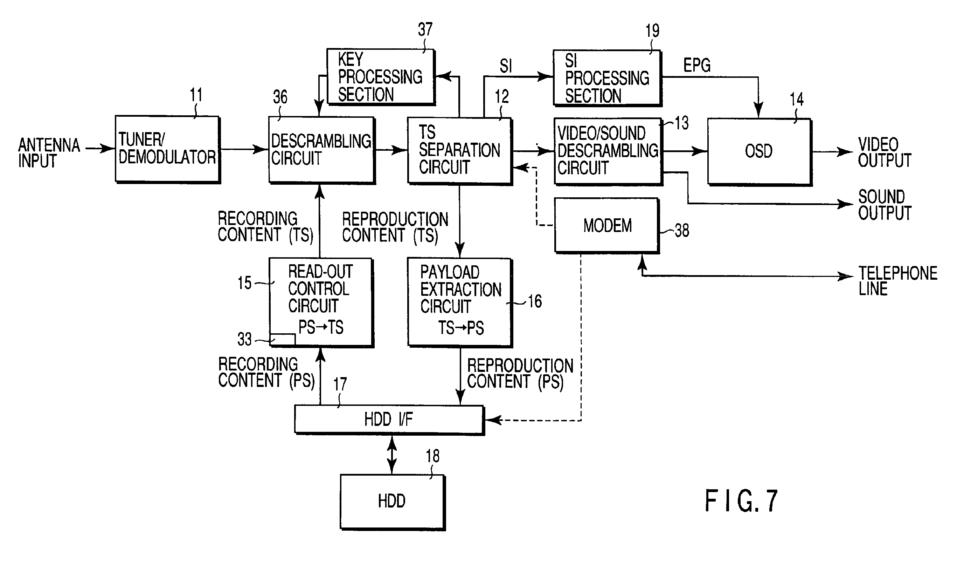

FIG. 7 is a block diagram showing a third embodiment of the digital broadcasting reception terminal to which the content receiving, recording and reproducing methods according to the present invention are applied.

In this reception terminal, a descrambling circuit 36 is provided in front of the TS separation circuit 12. The descrambling circuit 36 first descrambles an input signal like the way a scrabled program in ordinary digital broadcasting is to be viewed. Specifically, a scrambled TS in FIG. 4A (corresponding to FIG. 1D) is descrambled by the descrambling circuit 36 and input to the TS separation circuit 12. The scrambling process in this case is performed using a key exclusively assigned to the present apparatus.

The TS separation circuit 12 separates the descrambling key 31 shown in FIG. 1D and supplies it to a descrambling key processing section 37. The descrambling key processing section 37 keeps the descrambling key 31, for example, in an internal memory or an external recording medium. The content data is recorded on the HDD 18 in the same manner as illustrated in FIG. 2. Specifically, the content data is recorded on the HDD 18 in the scrambled state (i.e. in the state in which the content data can be descrambled by the key 31).

When the content data recorded on the HDD 18 is to be reproduced, the data is read out of the HDD 18 in the same manner as described with reference to FIG. 2. The read-out data is descrambled by the descrambling circuit 36 provided in front of the TS separation circuit 12. In this case, the descrambling key 31, which is kept in the internal memory, external recording medium, etc., is used. The descrambled data is delivered to the TS separation circuit 12 and reproduced, as described above.

Since the descrambling key 31 is used at the time of recording the content in the HDD 18, it is possible to use such an accounting method that accounting is made only at the time of receiving content and using the descrambling key 31. Since the descrambling key 31 is not present in the scrambled data stored in the HDD, this embodiment is suitable to a case where the capacity of the HDD 18 has decreased to a critical level and the content needs to be stored in an external recording medium other than the HDD.

It is also possible to use such a method that the descrambling key, which is to be used when content data is read out of the HDD 18 and descrambled by the descrambling circuit 36 in front of the TS separation circuit 12, is acquired from the content supplier via a modem 38 each time of reproduction. In this case, it is possible to make accounting each time content is reproduced. Moreover, content data (PS) recorded on the HDD 18 may be directly recorded on the HDD 18 via the modem 38 and HDD interface 17 over a path other than the broadcasting path. Data communication between the modem 38 and the TS separation circuit 12 or HDD interface 17 is effected via a controller such as an MPU (not shown).

In the above embodiment, the descrambling key 31 for the scrambled data shown in FIG. 1A is multiplexed on the data shown in FIG. 1D and the resultant data is further scrambled. However, the data shown in FIG. 1A may be scrambled and the descrambling key for descrambling this data may be multiplexed on the data shown in FIG. 1A. In this case, when the data read out of the HDD 18 is to be reproduced, the descrambling process may be performed by using the same accounting and descrambling system as in the case of viewing scrambled programs in ordinary digital broadcasting.
In this case, too, accounting may be made each time of reproduction.

As has been described above, according to the present invention, the supplied data has special structures. Thus, when content recorded on the recording medium is reproduced, the functional blocks of the receiving apparatus for receiving and descrambling ordinary digital broadcast data may be substituted for the actual descrambling and reproduction of data and the special reproducing functions such as fast forward and slow reproduction are realized.

## Claims

1. An apparatus (10) for receiving and recording/ reproducing transmitted content data, the content data being generated such that encoded video/sound signals are multiplexed as a TS (transport stream), the apparatus **characterized by** comprising:
the TS is divided and multiplexed as a PS (program stream), and the PS is divided and multiplexed as a TS for transmission,
separation means (12) for separating TS packets from the received data, the TS packets each including the PS which has been divided and multiplexed as the TS;
extraction means (16) for extracting PS data from payload portions of the TS packets separated by the separation means;
recording means (18) for recording the PS data extracted by the extraction means on a recording medium; and
read-out control means (15) for reading out the PS data, which has been recorded by the recording means, from the recording medium and providing the TS data, which has been formed by multiplexing the encoded video/sound signals, from the payload portions of the PS data.

2. An apparatus according to claim 1, **characterized in that** said PS includes a plurality of private packets each having a pack header and a payload, and said read-out control means (15) has a counter (33), which operates according to an SCR provided at the pack header of the PS, and outputs the data read out from the recording medium on the basis of a value of the counter (33).

3. An apparatus according to claim 1, **characterized in that** said PS includes special reproduction information (30) which is obtained when the video/sound signals are encoded, and said read-out control means (15) reads out the PS data from the information recording medium on the basis of the special reproduction information (30).

4. An apparatus according to claim 1, **characterized in that** said extraction means (16), said recording means (18) and said read-out control means (15) are constructed as a recording/reproducing unit, and the recording/ reproducing unit and the separation means (12) are connected by a 1394 interface.

5. An apparatus according to claim 1, **characterized in that** said recording/reproducing apparatus (10) is provided within a TV receiver (32) as a structural element of the TV receiver.

6. An apparatus according to claim 1, **characterized by** further comprising an interface (38) for obtaining the PS data to be recorded on the recording medium from a transmission path other than broadcasting, the PS data being directly recorded on the recording medium from the interface (38).

7. An apparatus according to claim 1, wherein said transmitted data is scrambled, said apparatus **characterized by** further comprising:
first descrambler means (36) for descrambling the received data;
second separation means for separating TS packets and the descrambling key from the data descrambled by the first descrambler means (36), the TS packets corresponding to the PS which has been divided and multiplexed as the TS;
storage means (37) for storing the descrambling key separated by said second separation means; and
second descrambler means for descrambling the TS data provided by the read-out control means (15), using the descrambling key stored in the storage section.

8. An apparatus according to claim 7, **characterized by** further comprising an interface (38) for obtaining the descrambling key from a transmission path other than broadcasting.

9. A content supply method **characterized by** comprising the steps of:
multiplexing encoded video/sound signals as a TS
dividing and multiplexing the TS as a PS, and providing PS data as PS content data;
dividing the PS content data for transmission, and multiplexing once again the divided PS content data as a TS; and
transmitting the data multiplexed once again as the TS.

10. A method according to claim 9, **characterized in that** the step of dividing and multiplexing the TS as a PS includes a step of grouping at least one TS packet as private packets, adding a packet header to each of the private packets, grouping at least one of the private packets with the packet header, and adding a pack header to the grouped private packet.
